(19) Europäisches Patentamt

European Patent Office

Office européen des brevets

(11) **EP 2 423 531 A1**

(12) **EUROPEAN PATENT APPLICATION**
published in accordance with Art. 153(4) EPC

(43) Date of publication:
   **29.02.2012   Bulletin 2012/09**

(21) Application number: **10767153.9**

(22) Date of filing: **23.04.2010**

(51) Int Cl.:
   **F16F 1/06** (2006.01)      **F16F 1/02** (2006.01)
   **F16F 15/123** (2006.01)

(86) International application number:
   **PCT/JP2010/057232**

(87) International publication number:
   **WO 2010/123098 (28.10.2010 Gazette 2010/43)**

(84) Designated Contracting States:
   **AT BE BG CH CY CZ DE DK EE ES FI FR GB GR HR HU IE IS IT LI LT LU LV MC MK MT NL NO PL PT RO SE SI SK SM TR**

(30) Priority:   **24.04.2009   JP 2009106959**

(71) Applicant: **Nhk Spring Co., Ltd.**
   **Kanazawa-ku**
   **Yokohama-shi**
   **Kanagawa 236-0004 (JP)**

(72) Inventors:
   • **KAWANABE, Kenjiro**
     **Kamiina-gun**
     **Nagano 399-4301 (JP)**

   • **AMANO, Tanehira**
     **Kamiina-gun**
     **Nagano 399-4301 (JP)**
   • **KATO, Nobuharu**
     **Kamiina-gun**
     **Nagano 399-4301 (JP)**
   • **KOBAYASHI, Takao**
     **Kamiina-gun**
     **Nagano 399-4301 (JP)**
   • **YAMADA, Hirotaka**
     **Kamiina-gun**
     **Nagano 399-4301 (JP)**

(74) Representative: **Eisenführ, Speiser & Partner**
   **Postfach 31 02 60**
   **80102 München (DE)**

(54)   **COIL SPRING**

(57)   A coiled spring has reduced hysteresis loss due to friction resistance with a member, and resistance to contact between the spirals of the wire can be improved. An arc-spring 41 is disposed in a clutch unit 1. In order to reduce hysteresis loss, a wear-resistant layer having a friction coefficient $\mu$ of less than 0.15 and a hardness of Hv1000 or more is formed on the surface of the arc-spring 41. The wear-resistant layer is a $MoS_2$ layer (molybdenum disulfide layer), an electroless NiP layer (electroless nickel-phosphorus layer), a DLC layer (diamond like carbon layer), or a TiN layer (titanium nitride layer). The wear resistance can be improved in the wear-resistant layer excluding the $MoS_2$ layer. The DLC layer should be formed on the surface of the coiled spring as shown in Figs. 2A and 2B, which requires a high wear resistance, because the hardness of the DLC layer is approximately Hv3000.

Fig. 1A

Fig. 1B

EP 2 423 531 A1

**Description**

BACKGROUND OF THE INVENTION

1. Field of the Invention

The present invention relates to a coiled spring used in a damper apparatus, and in particular, relates to improvement in a technique for surface treatment of the coiled spring.

2. Related Art

A coiled spring is used in a damper apparatus provided in an apparatus such as a clutch unit, a lock-up mechanism, and a flywheel (see Japanese Patent Applications, First Publication No. 5-172184, No. 63-149447, and No. 8-105508). For example, in the clutch unit, an arc-spring is provided at a position between a hub and a plate, and torque is transmitted from an engine side to a transmission side by a coiled spring in engaging a clutch, and an impact occurring in transmitting the torque is absorbed by the coiled spring. The arc-spring is a compression coiled spring bent in an arc-shape.

SUMMARY OF THE INVENTION

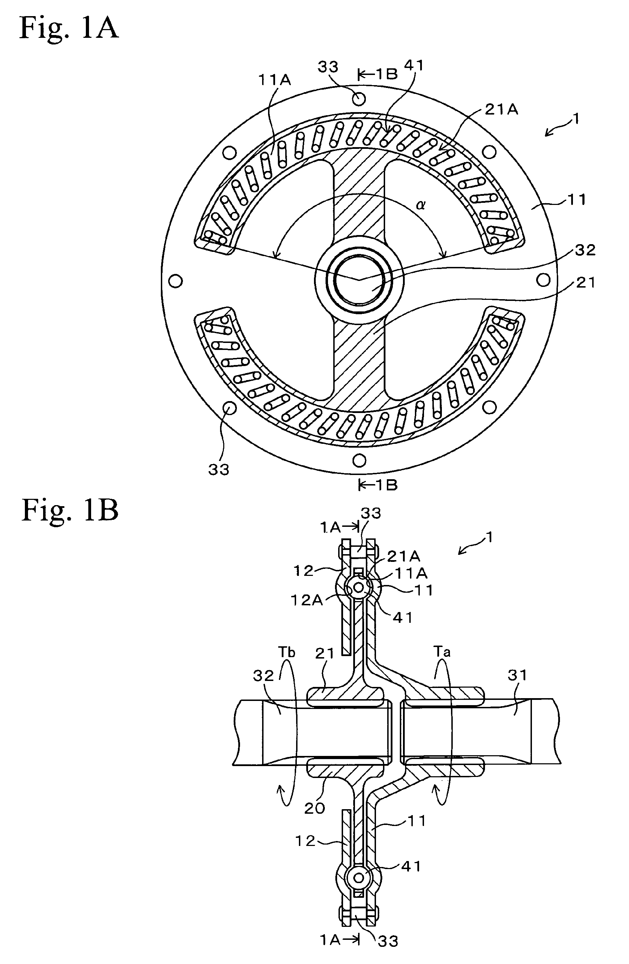

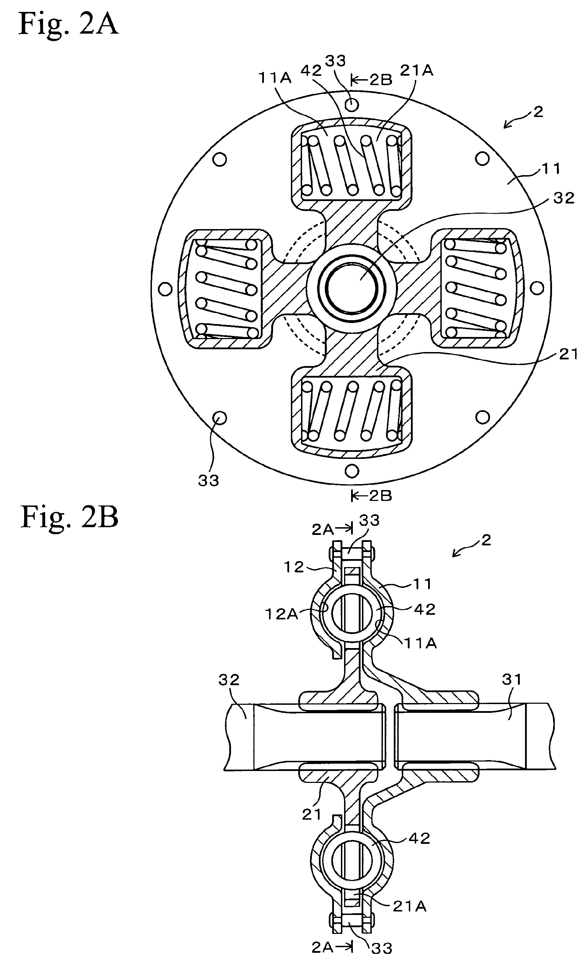

However, when the arc-spring is used in the damper apparatus, for example, equipped in the clutch unit, the following problems may occur.
Frictional loss in the arc-spring is caused by contacting and sliding with a counter member in the inside of the damper apparatus and torque transmitting characteristics are affected by the friction loss. Therefore, it is necessary to reduce such inner hysteresis loss (amount of friction resistance mainly caused by contacting and the sliding to the counter member) as loading tolerance amount of the simple spring, so that the arc-spring is difficult to produce.
In the arc-spring, new materials are developed and surface improvement is performed (mainly using shot-peening and nitriding treatment) in order to improve durability against high stress generated in a surface thereof (for example, see Japanese Patent No. 3998733). However, when the arc-spring is used in a condition in which a gap between the spirals of the spring wire is narrow, the spirals of the wire substantially contact each other, or when the spring is used under high vibration amplitude, the spirals of the wire easily contact each other by repeatedly expanding and contracting. Furthermore, when the spirals of the wire contact by a strong force, the material of the wire is partially worn by contact wear of the spirals of the wire, whereby the cross section of the wire is decreased.
In these cases, a reinforced layer (a surface improved layer) formed at the surface of the spring is lost, so that durability of the spring is greatly degraded, and the spring may be prematurely broken. Therefore, it was necessary to inhibit the contact between the spirals of the wire by forming a wide gap therebetween.
Therefore, an object of the present invention is to provide a coiled spring in which hysteresis loss caused by friction resistance with respect to a counter member can be reduced and durability against contact between the spirals of the wire can be improved.
The present inventors have researched and have realized the above objects as follows. Figs. 1A, 1B, 2A, and 2B show schematic structures of clutch units 1 and 2 provided with specific embodiments of coiled springs 41 and 42 used for explanations for research by the present inventors. Figs. 1A and 2A are cross-sectional views in a perpendicular direction to an axis of a driving shaft, and Fig. 1B and 2B are cross-sectional views parallel to the axis of the driving shaft. The clutch units 1 and 2 have the same structure, other than the coiled springs 41 and 42 having different shapes, so that the same components of the structures are labeled with the same reference numerals. In the following explanation, examples in which the coiled spring of the present invention is applied to the clutch unit are used and the coiled spring of the present invention may be applied not only to the clutch unit but also to the damper apparatus (mechanism) equipped in apparatuses such as a lock-up mechanism and a flywheel.
Each of the clutch units 1 and 2 is provided with two plates 11 and 12 and a hub 21. The plates 11 and 12 face each other and are connected via a pin 33. An engine side driving shaft 31 is connected to the plate 11 disposed at the engine side. The hub 21 is disposed at a position between the plates 11 and 12. A transmission side driving shaft 32 is connected to the hub 21. Coiled springs 41 and 42 are provided at a position surrounded by the plates 11 and 12 and the hub 21. Specifically, a recesses 11A and 12A are formed in the plates 11 and 12 and an opening portion 21A is formed at a position facing the recesses 11A and 12A in the hub 21. The coiled spring is disposed at a position between the recesses 11A and 12A and the opening portion 21A.
In the clutch unit 1 shown in Figs. 1A and 1B, an arc-spring 41 is provided as a coiled spring. The arc-spring 41 is a compression coiled spring bent in an arc-shape. The arc-spring 41 is provided in the inside of the clutch unit 1 in a condition in which the arc-spring 41 is bent at a predetermined bending angle $\alpha$ (>0). In the clutch unit 2 shown in Figs. 2A and 2B, the coiled spring 42 disposed in a linear shape is provided as a coiled spring. The coiled spring 42 is not bent in the inside of the clutch unit 2, so that the bending angle $\alpha$ is 0. In the clutch units 1 and 2, not only is torque transmitted from the engine side to the transmission side by the coiled springs 41 and 42, but also impact generated in the transmitting is absorbed by the springs.

1. Study of Problems in Conventional Techniques

1-A. Hysteresis Loss Caused by Friction Resistance with Respect to Counter Member

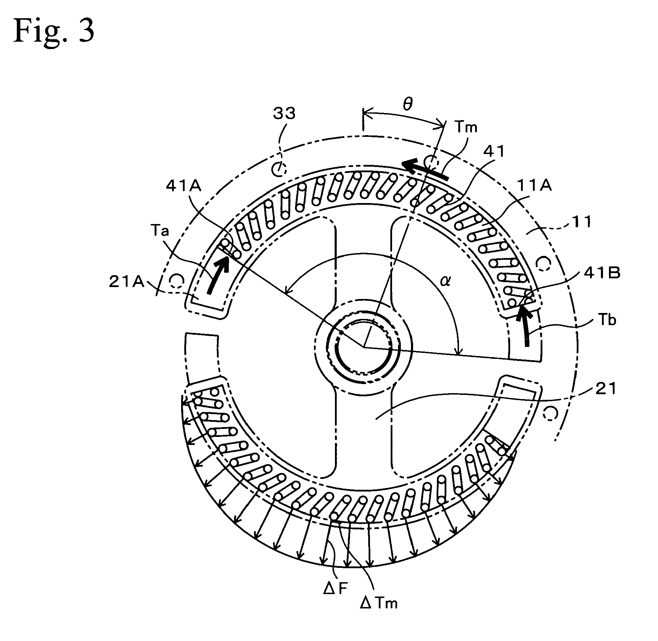

In the clutch unit 1 shown in Figs. 1A and 1B, as shown in Fig. 3, when the engine side driving shaft 31 is twisted at a twisting angle $\theta$, an input torque Ta acts on an input end 41A of the arc-spring 41 and an output torque Tb acts on an output end 41B of the arc-spring 41.

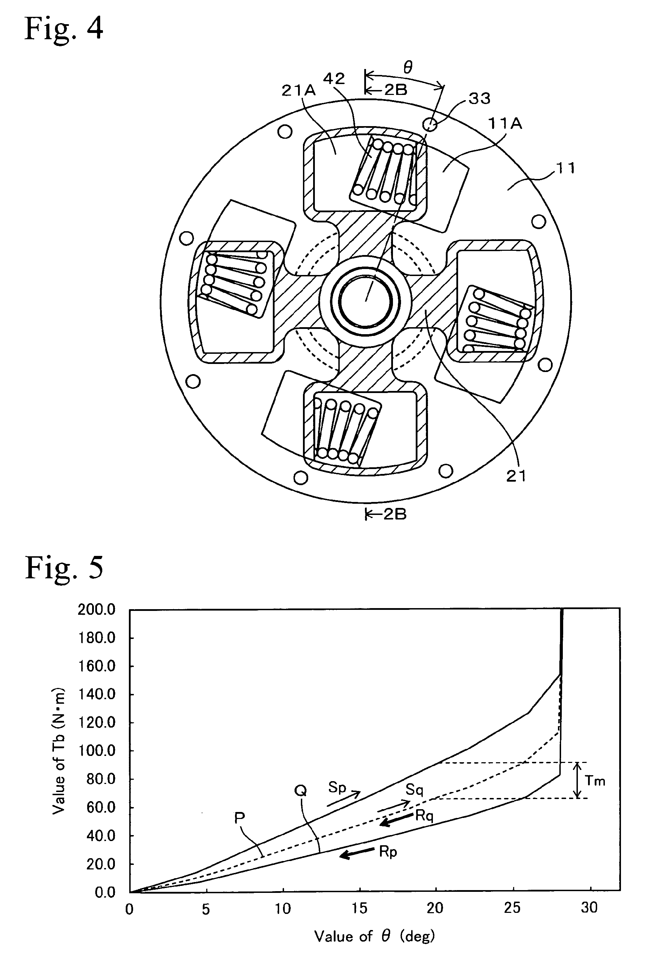

Fig. 5 is a line graph of torque showing relationships between the twisting angles $\theta$ and the output torque Tb of the arc-spring 41 and the coiled spring 42. In Fig. 5, arrowheads Sp and Sq show a direction in which the degree "$\theta$" is increased (forward) and thick arrowheads Rp and Rq show a direction in which the degree $\theta$ is decreased (backward). In the following explanations, the thick arrowheads (backward) are used unless the direction is specified.

As shown in Fig. 3, the arc-spring 41 is deflected in contacting a wall of the clutch unit 1 under a pressed condition toward the wall and contact force $\Delta F$ perpendicular to each portion of the wire of the arc-spring 41 acts on the wall. Strength of the force $\Delta F$ varies according to an acting position and substantially shows the distribution as shown in Fig. 3. Force $\Delta Tm$ is generated by the contact force $\Delta F$ and friction coefficient $\mu$ between the wire of the arc-spring 41 and the wall of the clutch unit 1 and friction torque Tm is generated as the sum of the force $\Delta Tm$. In such an arc-spring 41 of the clutch unit 1, the torque line Q shown in Fig. 5 is obtained.

On the other hand, in the coiled spring 42 of the clutch unit 2 shown in Figs. 2A and 2B, as shown in Fig. 4, the bending angle is 0 unlike in the case of the arc-spring 41, so that friction loss caused by contacting a wall of the clutch unit 2 can be ignored (that is, Ta = Tb and Tm $\approx$ 0). Therefore, when the engine side driving shaft 31 is twisted at the twisting angle $\theta$, the torque line P shown in Fig. 5 can be obtained.

According to the torque lines P and Q shown in Fig. 5, in the arc-spring 41 disposed in the inside of the clutch unit 1, a relational formula "Ta = Tb + Tm" (that is, Tm = Tb - Ta) may be true in relationships in the input torque Ta, the output torque Tb and the friction torque Tm. The "e" indicates the natural logarithm. When the input torque Ta and the output torque Tb are considered from a viewpoint of transmission efficiency $\eta$, the following Formula 1 is true. According to the Formula 1, the output torque may be the same as the torque transmission efficiency $\eta$. When the output torque is high, the "$\eta$" is high in proportion thereto, and the friction torque Tm is low in inverse proportion thereto.

Formula 1

$$Tb\,/\,Ta = (Ta - Tm)\,/\,Ta = \eta = 1\,/\,e^{\mu\alpha}$$

In ordinal clutch units, when the friction resistance between the unit and an outer circumference of the arc-spring is large, the torque line in the line graph is wavy and feeling in shifting transmission and actual fuel consumption are deteriorated by variation of the output torque Tb. Therefore, the output torque Tb (= $\eta$) is required to have as large a characteristic as possible (the value of the torque transmission efficiency $\eta$ is large). According to the Formula 1, the torque transmission efficiency $\eta$ is decreased as the bending angle $\alpha$ and the friction coefficient $\mu$ are increased.

1-B. Degradation of Durability against Contact between the Spirals of Wire

In the conventional techniques, improvement in strength of a material surface in which the greatest stress is generated is effective for high strengthening of a spring, so that improvement of the material (for example, using a material having high durability limit) and the surface improvement (treatments such as shot-peening and nitriding) were performed.

In using compression springs, load ordinarily acts in an axial direction and the spirals of a wire of the spring repeatedly contact each other by excess compression caused by surging and excessive loading. This contact between the spirals of the wire frequently occurs in a structure in which offset load acts on the spring (for example, as shown in Fig. 4, a structure in which the coiled spring 42 disposed in the inside of the clutch unit 2 is very strongly compressed toward the wall side of the clutch unit 2).

In this structure, deflection amount of portions of the coiled spring 42 at the side of the wall of the clutch unit 2 is increased, so that the spirals of the wire easily contact each other. Furthermore, when excessive torque is input into the clutch unite, impacting contact between the spirals of the wire of the coiled spring 42 is repeated. This partial contact between the spirals of the wire also occurs in the arc-spring 41 shown in Fig. 2A and Fig. 2B.

When the contact between the spirals of the wire is repeated by using such a spring, wear (decrease of the material) occurs in the surface of the wire. In this case, even though a reinforced layer (surface improved layer) may be formed so as to provide durability against high stress to the surface of the spring wire, the conventional reinforced layers are lost at wear, and durability of the wire may be greatly deteriorated. Furthermore, the material surface is subjected to surface improvement, whereby a coat may be formed. However, the coat formed by the surface improvement of the conventional technique has low hardness and wears when there is contact for a long time, so that the wear may reach the reinforced layer on the surface of the wire. Such wear is inversely proportional to hardness of the reinforced layer, and the wear amount decreases as the surface hardness increases.

2. Proposal of the Present Invention Based on Study of Problems in Conventional Techniques

According to study of the paragraph 1-A, a material having low friction coefficient $\mu$ is preferably applied to the coiled spring for reducing hysteresis loss. Ordinarily, a spring steel such as a SWOSC-V steal and a SWP steel is used as a material of a spring and the friction coefficient $\mu$ of the steels by sliding to the clutch unit is about 0.15. Therefore, the surface of the spring is subjected to the surface treatment so as to set the friction coefficient of the coiled spring to be smaller than that of the spring steel, and hysteresis loss caused in the inside of the clutch unit is reduced.

According to study of the paragraph 1-B, wear amount of the spirals of the wire is inversely proportional to hardness of the reinforced layer, and decreases as the hardness of the surface increases. However, the surface hardness obtained by the surface improvement by treatments such as shot-peening and nitriding is only about Hv800 to Hv1000. Therefore, degradation of durability caused by wear can be inhibited since the coiled spring is subjected to a surface treatment in which a surface harder than the surface hardness of the coiled spring can be obtained.

As explained above, for reducing hysteresis loss, it is necessary to form a wear-resistant layer of which the value of the friction coefficient $\mu$ is less than 0.15 on the surface of the coiled spring. Furthermore, for improving wear resistance, it is necessary to form a wear-resistant layer of which the hardness is Hv1000 or more on the surface of the coiled spring. The coiled spring of the present invention has been made based on the above knowledge. The present invention provides a coiled spring applied to the damper apparatus, including: a wear resistant layer formed on a surface thereof; in which the wear-resistant layer is a $MoS_2$ layer (molybdenum disulfide layer), an electroless NiP layer (electroless nickel phosphorous layer), a DLC layer (diamond-like-carbon layer) or a TiN layer (titanium nitride layer).

In the coiled spring of the present invention, when the $MoS_2$ layer is used as a wear-resistant layer, the friction coefficient is about 0.08 and sliding property is improved, so that hysteresis loss in the inside of the clutch unit can be reduced.

In the coiled spring of the present invention, when the electroless NiP layer is used as a wear-resistant layer, the friction coefficient is about 0.08, so that hysteresis loss in the inside of the clutch unit can be reduced similarly to the case in which the $MoS_2$ layer is used. Furthermore, a degree of hardness of a surface of the coiled spring is Hv1000 or more, so that wear resistance is improved. As a result, durability against the contact between the spirals of the wire can be improved. When the DLC layer or the TiN layer is used as a wear-resistant layer, the friction coefficient is about 0.1 and sliding property is improved, so that hysteresis loss in the inside of the clutch unit can be reduced. Furthermore, the hardness of the TiN layer is about Hv2000 and the hardness of the simple DLC layer is about Hv3000, so that the wear resistance is further improved compared to the $MoS_2$ layer and the electroless NiP layer. As a result, durability against contact between the spirals of the wire can be further improved.

The coiled spring of the present invention can be applied to various structures. For example, when the DLC layer is used as a wear-resistant layer, the thickness thereof may be 1 to 10 $\mu$m. Since the hardness of the DLC layer is very high, when the film thickness thereof is more than 10 $\mu$m, cracks in the DLC layer are formed and are extended in expanding and contracting the coiled spring, and the spring may be broken. When the thickness of the DLC layer is less than 1 $\mu$m, the DLC layer may be lost in a short time by wear. Therefore, the thickness of the DLC layer is preferably 1 to 10 $\mu$m.

According to the coiled spring of the present invention, when the $MoS_2$ layer is used as a wear-resistant layer, hysteresis loss in the inside of the clutch unit can be reduced. When the electroless NiP, the DLC or the TiN layer is used, hysteresis loss in the inside of the clutch unit can be reduced and wear resistance can be improved.

BRIEF DESCRIPTION OF DRAWINGS

Fig. 1A and Fig. 1B are views showing schematic structures of a clutch unit in which a specific example of a coiled spring is provided, in which Fig. 1A is a cross-sectional view taken along a line 1A to 1A in Fig. 1B, and Fig. 1B is a cross-sectional view taken along a line 1B to 1B in Fig. 1A.

Fig. 2A and Fig. 2B are views showing schematic structures of a clutch unit in which a specific example of a coiled spring is provided, in which Fig. 2A is a cross-sectional view taken along a line 2A to 2A in Fig. 2B, and Fig. 2B is a cross-sectional view taken along a line 2B to 2B in Fig. 2A.

Fig. 3 is a cross sectional view showing a condition of the clutch unit shown in Figs. 1A and 1B, in which an engine side driving shaft is twisted at a predetermined twisting angle $\theta$.

Fig. 4 is a cross sectional view showing a condition of the clutch unit shown in Figs. 2A and 2B, in which the engine side driving shaft is twisted at the predetermined twisting angle $\theta$.

Figs. 5 is a line graph of torque showing relationships between the twisting angles $\theta$ and the output torques Tb of an arc-spring and a coiled spring shown in Figs. 3 and 4.

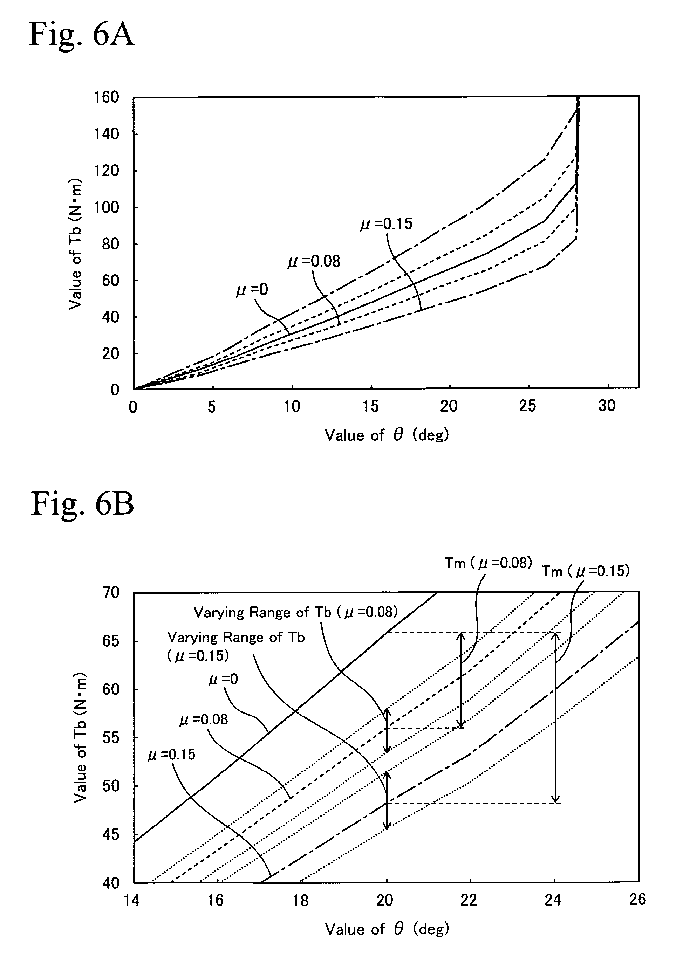

Figs. 6A and 6B are graphs showing results of an experiment in which an example of the arc-spring formed with a DLC layer thereon and a comparative example using a spring steel as a material are used in a clutch unit 1 shown in Figs. 1A and 1B in a first embodiment of the present invention, wherein Fig. 6A is a graph showing a relationship between the twisting angle $\theta$ and the output torque Tb, and Fig. 6B is a graph showing a relationship between the twisting angle $\theta$ and the output torque Tb of the example and the comparative example when the friction coefficient $\mu$ varies.

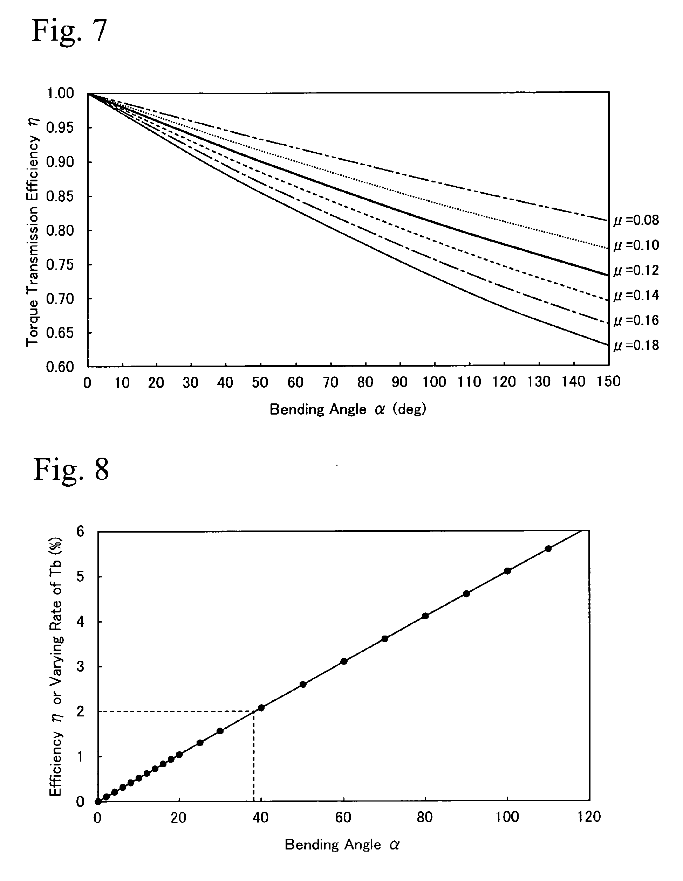

Fig. 7 is a graph showing a relationship between a bending angle $\alpha$ and a torque transmission efficiency $\eta$.

Fig. 8 is a graph showing varying rate of the output torque Tb and the torque transmission efficiency $\eta$ according to variation of the friction coefficient $\mu$ when the varying range of the friction coefficient $\mu$ is set at about plus or minus 20 %.

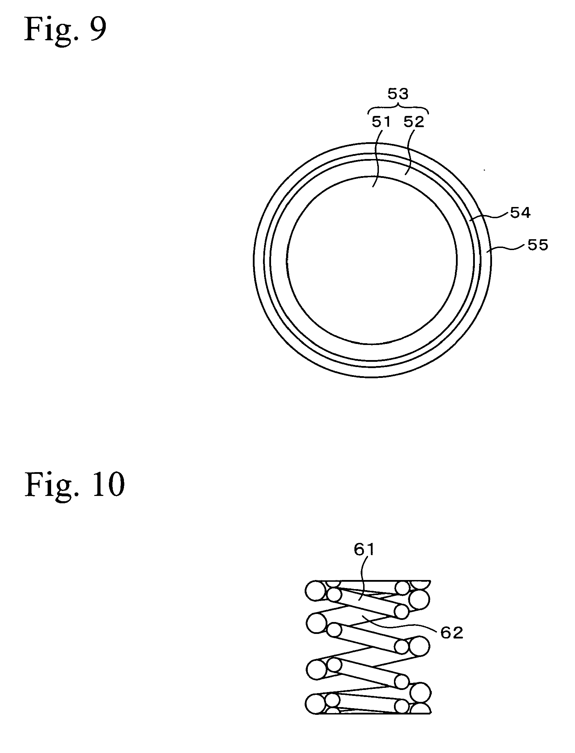

Fig. 9 is a cross-sectional view showing a structure of a coiled spring which is subjected to a DLC·STAR treatment in the first embodiment of the present invention.

Fig. 10 is a side view showing a modification of the spring in accordance with the first and second embodiments of the present embodiment.

DESCRIPTION OF THE PREFERRED EMBODIMENTS

1. First Embodiment

A first embodiment of the present invention is explained with reference to an example hereinafter. An arc-spring of the first embodiment has a structure preferably applied to an arc-spring 41 of a clutch unit 1 shown in Figs. 1A, 1B, and 3. In the arc-spring 41, a bending angle $\alpha$ can be large due to the shape thereof compared to that of a coiled spring 42 shown in Figs. 3 and 4, so that large deflecting amount can be obtained. Therefore, the twisting angle $\theta$ can be large, so that the arc-spring 41 may be advantageously used in clutch units.

In the first embodiment, since a surface of the arc-spring 41 is subjected to a DLC treatment (diamond-like-carbon treatment), a DLC layer (diamond-like-carbon layer) is formed on the surface of the arc spring 41 as a wear-resistant layer.

When the bending angle $\alpha$ of the arc-spring 41 is large, the amount of friction torque Tm increases. In the conventional arc-spring 41 in which a spring steel such as SWOSC-V steel and SWP steel is used, the value of a friction coefficient $\mu$ caused by sliding with respect to the clutch unit 1 is about 0.15. When a DLC layer is formed on the surface of the arc-spring 41 so that the friction coefficient of the arc-spring 41 is smaller than that of the spring steel, the value of the friction coefficient $\mu$ of the surface of the arc-spring 41 is about 0.1. In this case, an output torque Tb and a torque transmission efficiency $\eta$ are increased due to decrease of the friction coefficient $\mu$ in the described Formula 1, and the friction torque Tm is reduced.

Fig. 6A is a graph showing a relationship between the twisting angle $\theta$ and the output torque Tb obtained by using an example (the friction coefficient $\mu$ is 0.1) of the arc-spring on which the DLC layer is formed and a comparative example (the friction coefficient $\mu$ is 0.15) in which the spring steel is used as a material in a clutch unit 1 shown in Figs. 1A and 1B. In the example and the comparative example, the bending angle $\alpha$ was 120°. The torque line when the friction coefficient $\mu$ is 0 in Figs. 6A and 6B indicates theoretical values in a frictionless condition.

As shown in Fig. 6A, it was confirmed that values on the torque line of the example (the friction coefficient $\mu$ = 0.1) are approximated to theoretical values (the friction coefficient $\mu$ = 0) due to decrease of the friction coefficient $\mu$ compared to those on a torque line of the comparative example (the friction coefficient $\mu$ = 0.15).

The varying range of the friction coefficient $\mu$ was within about plus or minus 20 % of design. For example, in a case of the comparative example (the friction coefficient $\mu$ = 0.15), the friction coefficient $\mu$ is about 0.12 to 0.18. Fig. 6B is a graph showing relationships between the twisting angles $\theta$ and the output torques Tb of the example and the comparative example when the friction coefficient $\mu$ varies. Fig. 6B is an enlarged graph showing a range in the vicinity of the 20° of the twisting angle $\theta$. In Fig. 6B, the fine dashed lines positioned at the upper and lower sides of the torque lines of the example and the comparative example are the upper and lower limit lines of variations thereof and a varying range of the output torque Tb between these lines are shown in the drawing. The varying range of the friction torque Tm is a difference from the theoretical value (the friction coefficient $\mu$ = 0) when the twisting angle $\theta$ is 20°.

As shown in Fig. 6B, it was confirmed that the varying range of the output torque Tb of the example is less than that of the comparative example.

Ordinarily, when the arc-spring is disposed in the clutch unit, a predetermined tolerance of the output torque Tb with respect to a particular twisting angle $\theta$ is required without relationship to the bending angle $\alpha$. The tolerance of

the output torque Tb that is different according to the model is generally about plus or minus 10 % of the output torque Tb.

In the arc-spring, the friction torque Tm is generated and is not uniform and variable. The output torque Tb is affected by this condition. For example, in a case in which the bending angle $\alpha$ is 0° or 180°, when the value of the bending angle $\alpha$ is 180°, the variation of the output torque caused by the variation of the friction torque Tm consumes the torque tolerance compared to a case in which the degree of the bending angles $\alpha$ is 0°, so that the torque tolerance as a simple spring is practically reduced. As a result, when the degree of the bending angle $\alpha$ is 180°, amount of the output torque Tb is determined at the center of the reduced tolerance, so that adjustment of the constant of the spring is required.

However, in the actual arc-spring, restrictions of dimensions and tolerances on the drawing are more severe, so that a range for adjusting the constant of the spring is very small. In actuality, when an average value of the output torque Tb in each lot within a tolerance range of the output torque Tb of plus or minus 10 % is more than plus or minus 2 %, the yield efficiency is greatly affected.

Fig. 7 is a graph showing a relationship between the bending angle $\alpha$ (contacting angle $\alpha$) and the torque transmission efficiency $\eta$ (a graph showing the Formula 1). As shown in Fig. 7, the torque transmission efficiency $\eta$ increases as the friction coefficient $\mu$ decreases and also increases as the bending angle $\alpha$ decreases.

Fig. 8 is a graph showing varying rate of the output torque Tb and the torque transmission efficiency $\eta$ according to the variation of the friction coefficient $\mu$ when the varying range of the friction coefficient $\mu$ is about plus or minus 20 %. Dashed lines in Fig. 8 indicate the bending angle $\alpha$ of 38° corresponding to a line exceeding 2 % as a variation tolerance of the torque transmission efficiency $\eta$. As shown in Fig. 8, when the friction coefficient $\mu$ varies within a range of about plus or minus 20 %, the torque transmission efficiency $\eta$ is beyond plus or minus 2 % if the bending angle $\alpha$ is about 38°. That is, when the output torque Tb and the torque transmission efficiency $\eta$ are beyond plus or minus 2 % as a variation tolerance caused by the variation of the friction coefficient $\mu$, decrease of the friction coefficient $\mu$ obtained by the surface treatment with respect to the arc-spring can be more effective.

As a result of the above experiment, if the DLC layer is formed on the surface of the arc-spring 41 so as to set the friction coefficient $\mu$ of the arc-spring 41 in which the bending angle $\alpha$ is 40° or more to be less than that of the friction coefficient of the spring steel (the friction coefficient $\mu$ is 0.15), the output torque Tb and the torque transmission efficiency $\eta$ are stabilized.

In the present embodiment, the example in which the DLC layer is formed as a wear-resistant layer is explained, but the present embodiment is not limited by this example. For example, a TiN layer (titanium nitride layer) of which the friction coefficient $\mu$ is about 0.1, a $MoS_2$ layer of which friction coefficient $\mu$ is about 0.08 and an electroless NiP layer (for example, electroless Ni-P or Ni-P-PTFE layer) of which the friction coefficient $\mu$ is about 0.08 may be formed instead of the DLC layer.

In the conventional techniques, hysteresis loss of the arc-spring 41 caused by sliding with respect to a counter member in a clutch unit 1 was a problem. In the first embodiment, as explained above, the sliding property of the arc-spring 41 can be improved by forming the above wear-resistant layer on the surface thereof, so that the hysteresis loss in the inside of the clutch unit 1 can be reduced.

2. Second Embodiment

A second embodiment of the present invention is explained with reference to an example. The second embodiment of the present embodiment has a structure which is preferably applied to a coiled spring 42 of a clutch unit 2 shown in Figs. 2A, 2B, and 4. In the second embodiment, a DLC layer is formed on the surface of the coiled spring 42 by a DLC treatment or a DLC·STAR treatment performed on the surface thereof.

In the DLC·STAR treatment, as shown in Fig. 9, a CrN layer 54 (chromium-nitride layer 54) and a DLC layer 55 are sequentially formed on a surface of the spring main body 53 having a spring base material 51 and a reinforced layer 52. In this case, the CrN layer is formed by the DLC· STAR treatment and this is different from the DLC treatment by which the CrN layer is not formed.

The CrN layer 54 is formed by the DLC·STAR treatment, so that very high hardness (hardness of Hv3000 or more) can be obtained and high adhesion with respect to the reinforced layer 52 can also be obtained. Furthermore, recesses of a rugged surface of the reinforced layer 52 can be filled by the DLC·STAR treatment, so that smoothness of the surface of the coiled spring 42 can be improved.

In the spring surface on which high stress acts, a crack is initiated at a small scar and is extended, whereby the spring may be broken. In the second embodiment, the scar is filled by the DLC·STAR treatment, so that notching sensitivity, which is a problem in a spring having high hardness, can be lessened.

In the coiled spring 42 formed by the conventional technique, which is used in the inside of the clutch unit 2, wear caused by contact between the spirals of the wire was a problem. In the second embodiment, wear resistance can be greatly improved by forming the DLC layer on the surface of the coiled spring 42, so that wear amount can be reduced compared to a case in which the DLC layer is not formed on the reinforced layer 51.

Specifically, the hardness of a simple body of the HLC layer is about Hv3000, so that wear resistance is improved compared to the $MoS_2$ layer and the electroless NiP layer having a hardness of about Hv1000. As a result, durability against the contact between the spirals of the wire can be improved. Furthermore, worn areas on the surface of the reinforced layer 52 are filled by the DLC·STAR treatment, wear resistance can be improved, and the notching sensitivity that was a problem of the spring having high hardness can be lessened. In particular, loss of the DLC layer by wear and occurrence of cracks in the DLC layer can be avoided by setting the thickness of the DLC layer at 1 to 10 $\mu$m. The $MoS_2$, the electroless NiP or the TiN layer can be formed instead of the DLC layer 55.

The present invention was explained using the first and the second embodiments, but the present invention is not limited to the embodiments, and the present invention can be applied with various modifications. For example, an embodiment in which plural springs (plural arc-springs 41 or plural coiled springs 42) are used and one spring is inserted into an inside of another spring can be applied. In this case, axes of the springs coincide with each other. Fig. 10 shows a structure in which a spring 61 is disposed in the inside of a spring 62. In this structure, wear amounts of the springs 61 and 62 in contact with each other can be reduced by forming the DLC layers on surfaces thereof. When a predetermined interference for press fitting between the springs 61 and 62 is set, contact resistance of the spirals of the wire can be reduced, so that load-deflection characteristics can be improved.

EXPLANATION OF REFERENCE NUMERALS

Reference numerals 1 and 2 indicate a clutch unit, 41 indicates an arc-spring, 42 indicates a coiled spring, 55 indicates a DLC layer, and 61 and 62 indicate a spring.

**Claims**

1. A coiled spring applied to a damper apparatus, comprising:

   a wear-resistant layer formed on a surface of the coiled spring;
   wherein the wear-resistant layer is a $MoS_2$ layer, an electroless NiP layer, a DLC layer, or a TiN layer.

2. The coiled spring according to claim 1, wherein the DLC layer has a thickness of 1 to 10 $\mu$m.

3. The coiled spring according to claim 1 or claim 2, wherein the wear-resistant layer has a hardness of at least Hv1000 and has a friction coefficient of less than 0.15.

Fig. 1A

Fig. 1B

Fig. 2A

Fig. 2B

# Fig. 3

## Fig. 4

## Fig. 5

## Fig. 6A

## Fig. 6B

Fig. 7

Fig. 8

Fig. 9

Fig. 10

## INTERNATIONAL SEARCH REPORT

International application No.

PCT/JP2010/057232

### A. CLASSIFICATION OF SUBJECT MATTER

*F16F1/06*(2006.01)i, *F16F1/02*(2006.01)i, *F16F15/123*(2006.01)i

According to International Patent Classification (IPC) or to both national classification and IPC

### B. FIELDS SEARCHED

Minimum documentation searched (classification system followed by classification symbols)

F16F1/06, F16F1/02, F16F15/123

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2008-248905 A  (NSK-WARNER Kabushiki Kaisha),<br>16 October 2008 (16.10.2008),<br>paragraphs [0009], [0020]<br>& US 2008/0237954 A1 | 1-2<br>1-3 |
| Y | JP 2004-169859 A  (NSK Ltd.),<br>17 June 2004 (17.06.2004),<br>paragraphs [0002], [0007], [0029] to [0035],<br>[0043] to [0044]; fig. 1 to 2<br>(Family: none) | 1-3 |
| Y | JP 2004-278588 A  (Chuo Spring Co., Ltd.),<br>07 October 2004 (07.10.2004),<br>paragraphs [0002], [0007] to [0008], [0017] to<br>[0018]<br>(Family: none) | 1-3 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 May, 2010 (14.05.10) | 25 May, 2010 (25.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5172184 A
- JP 63149447 A
- JP 8105508 A
- JP 3998733 B